# EUROPÄISCHE PATENTSCHRIFT

(11) **EP 2 719 036 B1**
(45) Veröffentlichungstag und Bekanntmachung des Hinweises auf die Patenterteilung: **29.04.2015**
(21) Anmeldenummer: 12725633.7
(22) Anmeldetag: 04.06.2012
(51) Int. Cl.: H01S 3/094, H01S 3/067, H01S 3/0941, H01S 3/042

(54) **ANREGUNGSEINHEIT FÜR EINEN FASERLASER**
PUMPING UNIT FOR A FIBER LASER
MODULE DE POMPAGE POUR LASER À FIBRE

(30) Priorität: 04.06.2011 DE 102011103286
(43) Veröffentlichungstag der Anmeldung: 16.04.2014
(73) Patentinhaber: Berger, Roland, 83125 Eggstätt (DE)
(72) Erfinder: Berger, Roland, 83125 Eggstätt (DE)
(74) Vertreter: Zeitler Volpert Kandlbinder Patent- und Rechtsanwälte Partnerschaft mbB
(86) Internationale Anmeldenummer: PCT/EP2012/002395
(87) Internationale Veröffentlichungsnummer: WO 2012/167918

(56) Entgegenhaltungen:
- WO-A1-03/079077
- DE-A1- 4 410 128
- JP-A- 2002 076 477
- JP-A- 2002 270 925
- JP-A- 2005 340 742
- US-A1- 2005 220 429

## Beschreibung

### Gebiet der Erfindung

Die vorliegende Erfindung betrifft eine Anregungseinheit für einen Faserlaser.

### Stand der Technik

Faserlaser sind eine spezielle Form der Festkörperlaser. Ein Faserlaser, genauer gesagt der Resonator eines Faserlasers besteht vereinfacht gesagt aus einer Glasfaser, die einen dotierten Kern und einen Mantel aufweist. Der dotierte Kern der Glasfaser bildet dabei das aktive Medium. Es handelt sich also um einen Festkörperlaser mit Lichtwellenleitereigenschaften. Das Pumplicht, das durch eine Pumpoptik in den Resonator des Faserlasers geleitet wird, bewirkt über die relativ große Länge (hohes Aspektverhältnis) des Faserlasers eine Anregung des aktiven Mediums.

Faserlaser werden optisch gepumpt, indem meist koaxial zum Faserkern in dessen Mantel oder in den Kern selbst Strahlung z.B. von Diodenlasern eingekoppelt wird. Doppelmantelfasern (engl.: *double clad fibers*) erlauben höhere Leistungen; aus dem inneren der beiden Mäntel gelangt die Pumpstrahlung in den aktiven Faserkern. Beim Pumpvorgang wird in den meisten Fällen die Leistung von einer Vielzahl von Diodenlasern kombiniert. Für eine derartige Vorrichtung hat sich die Bezeichnung "Combiner" auf diesem Fachgebiet eingebürgert. Ein Combiner ist ein Pumpmodul, bei dem mehrere Fasern, durch die das Licht jeweils eines Diodenlasers hindurchgeht, an eine Anregungsfaser angespleißt sind.

Eine weitere Möglichkeit, ein Pumpmodul zu realisieren, besteht in einer Anordnung, bei dem eine Vielzahl von Laserdioden so angeordnet werden, dass ihre Ausgangsstrahlen parallel zueinander sind und in einer Ebene liegen. Diese benachbarte Anordnung von Laserdioden ergibt einen so genannten Laser Bar. Stapelt man mehrere Laser Bars übereinander, ergibt das ein Laser Stack.

Ein Faserlaser besteht im Wesentlichen z.B. aus einer oder mehreren Pump-Laserdioden, einer Einkoppeloptik (separat oder an den Mantel angespleißte fasergekoppelte Diodenlaser) und einem Resonator. Der Begriff "Anregungseinheit", wie er in dieser Beschreibung verwendet wird, umfasst eine oder mehrere Pumplichtquellen (zum Beispiel Laserdioden in Form eines Combiners oder der vorstehend erwähnten Laser Bars) und die optischen und mechanischen Bauteile, die zum Einkoppeln des Pumplichts in die aktive Faser erforderlich sind.

Der Resonator kann unterschiedlich aufgebaut sein: entweder besteht er aus zwei zusätzlichen Spiegeln, die beispielsweise die beiden verspiegelten Faserendflächen sein können; auch eine am Rückspiegel- und/oder Auskoppelbereich vorhandene Anordnung aus Linse und normalen Laserspiegeln ist möglich. Vielfach werden auch Bragg-Gitter (auch: FBG = Faser-Bragg-Gitter) vorgesehen, die mittels Ultraviolettstrahlung (z.B. eines Excimerlasers 248 nm) in den Wellenleiter eingeschrieben werden. Im Faserkern entstehen dadurch laterale Brechzahlunterschiede mit hohen und niedrigen Brechzahlbereichen, die abhängig von der Periodenlänge Strahlung einer bestimmten Wellenlänge reflektieren. Der Vorteil hierbei ist, dass an diesen Gittern in einer Mono- oder Singlemodefaser keine zusätzlichen Koppelverluste entstehen und die Bragg-Gitter nur die gewünschten Wellenlängen selektiv reflektieren. Somit wird ein extrem schmalbandiger Laserbetrieb ermöglicht. Bei Multimodefasern > 20µm entstehen mehr Moden, die eine größere Bandbreite der Strahlung beinhalten. Mit externen Spiegeln kann die Wellenlängenbreite verkleinert werden.

Nach Austritt aus der aktiven Faser gelangt der Laserstrahl in eine Transportfaser oder in eine solche enthaltendes Lichtleitkabel. Dieser Vorgang läuft unter einem hohen Wirkungsgrad ab, weil nahezu keine Koppelverluste vorhanden sind. Über das Lichtleitkabel wird die Strahlung zum Beispiel zu einer Fokussieroptik einer Laser-Materialbearbeitungsmaschine geführt.

Ein Faserlaser enthält weiterhin die Stromversorgung und Kühlung für die Pump-Laserdioden, sowie weitere Wärmeableitvorrichtungen.

Hochleistungs-Faserlaser besitzen manchmal zusätzlich einen kleinen Faserlaser oder eine starke Laserdiode, die als Seed-Laser bezeichnet werden und zur Erzeugung der Eingangsleistung für einen nachgeschalteten Faserverstärker dienen (optisch gepumpte aktive Faser). Die Trennung des Lasers in Seed-Laser und Nachverstärkung hat den Vorteil, dass sich die Lasertätigkeit besser steuern lässt. Das betrifft die Wellenlängenstabilität, die Strahlqualität und die Leistungsstabilität bzw. Pulsbarkeit. Zwischen Seed-Laser und Verstärkerfaser befindet sich meist ein optischer Isolator.

Der aus dem Kern (z.B. na = 0,06) austretende Laserstrahl hat je nach Faserkerndurchmesser z.B. einen Gesamtwinkel von ungefähr 5°-10° (na = 0,05-0,1). Die Strahlqualität ist hoch; der Mode des Strahls ist im Allgemeinen ein Mode TEM 00, ein so genannter Monomode oder Singlemode, der bei Laserherstellern sowie in der Industrie wegen seiner guten Eigenschaften beim Schweißen, Schneiden, Bohren etc. gewünscht wird.

DE 26 46 692 A1 zeigt einen Flüssigkeitslaser mit Anregungslichtquellen 5, 6 in Form von Blitzlampen, die jeweils in einem ellipsenförmigen Raum untergebracht sind. Zwischen den beiden Ellipsenräumen befinden sich zwei Abbildungsoptiken 15, 16, die zwischen sich einen optischen Resonator 4 aufnehmen. Der Resonator 4 wird über die Anregungslichtquellen gepumpt, d.h. das Pumplicht läuft von den in den Anregungsräumen befindlichen Anregungslichtquellen zum Resonator.

DE 198 33 166 A1 beschreibt eine Pumplichtzuführung für laseraktive Fasern. Eine derartige laseraktive Faser ist in Figuren 1a und 1b dieser Druckschrift gezeigt: Sie ist in einem rohrförmigen Volumen spiralförmig untergebracht. Laserdioden 13 strahlen das Pumplicht senkrecht auf die Faser ab, die als vollständige Faser mit Umhüllung vorliegt. Der Wirkungsgrad der Lichteinkopplung dürfte hier aufgrund des Vorhandenseins der Umhüllung der laseraktiven Faser extrem schlecht sein. Eine Abbildungsoptik zwischen den Laserdioden und der Faser ist nicht vorhanden.

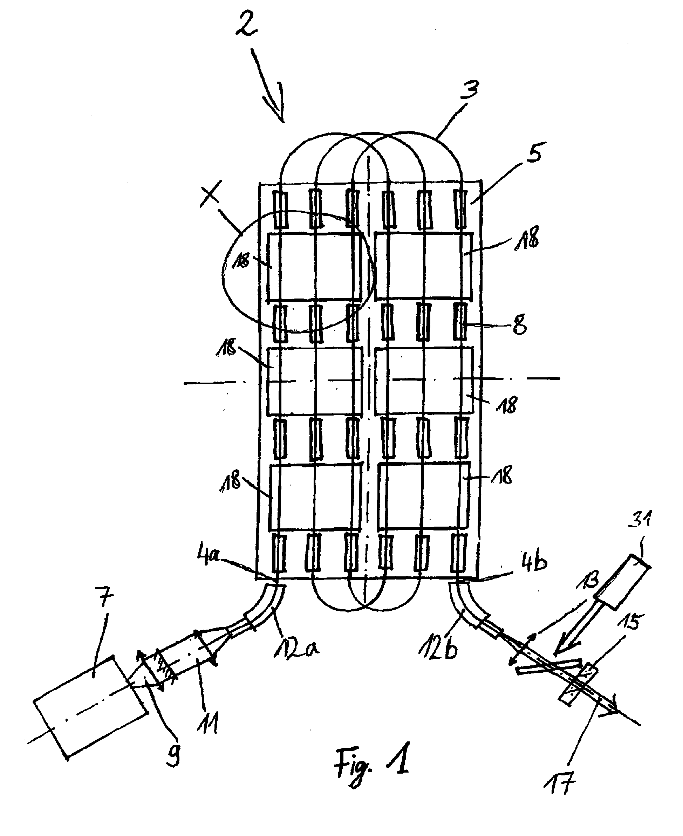

DE 39 43 722 C2 zeigt eine herkömmliche Einkopplung eines Pumplichts in ein Lasermedium 2. Beispielhaft sind in Figur 1a bis 1c Ausführungen gezeigt, in denen ein Pumplicht 42 von einer Laserdiode 41 zur Oberfläche des Lasermediums 2 geführt wird. Die Laserdioden stehen zwar senkrecht zum Lasermedium, wobei die sich Lichtleiteinrichtungen stets so erstrecken, dass das Pumplicht unter einem spitzen Winkel zum Lasermedium in dieses gelangt.

Der Ort der Einkopplung wird häufig als Spleißstelle bezeichnet. JP 2002 076 477 A und JP 2005 340 742 A zeigen optisch gepumpte Faserlaser. Die Pumpstrahlung wird transversal eingekoppelt.

Es ist die Aufgabe der Erfindung, einen Faserlaser so zu verbessern, dass er bei senkrechter Einstrahlung eines Pumplichts einen akzeptablen Wirkungsgrad hat, und auf eine Zwischenfaserkopplung zum Pumpen verzichtet werden kann. Anders ausgedrückt, soll das Pumplicht nicht mittels einer zusätzlichen Faser in die aktive Faser des Faserlasers gelangen. Diese Aufgabe wird gelöst durch eine Vorrichtung mit den Merkmalen gemäß Patentanspruch 1. Weitere vorteilhafte Ausführungsformen ergeben sich aus den davon abhängigen Unteransprüchen.

Weitere Merkmale und Vorteile dieser Erfindung ergeben sich aus der Beschreibung einer bevorzugten Ausführungsform mit Bezug auf die beigefügten Zeichnungen.

### Kurze Beschreibung der Zeichnungen

Figur 1 zeigt eine Draufsicht auf eine Ausführungsform einer erfindungsgemäßen Anregungseinheit;
Figur 2 zeigt den in Fig. 1 mit X gekennzeichneten Bereich in einer Querschnittsansicht;
Fig. 3 zeigt einen Querschnitt der Anregungsfaser im Bereich einer Anregungskammer;
Fig. 4 zeigt eine Abwandlung einer Anregungskammer;
Fig. 5 zeigt in einer Draufsicht ein Teilstück der Anregungsfaser mit zwei beispielhaften transversalen Pumplichtquellen;
Fig. 6 zeigt eine Schnittansicht gemäß der Linie A-A von Fig. 5;
Figuren 7a bis 7e zeigen verschiedene Möglichkeiten der Verteilung eines eingekoppelten Strahls in einem Pumpcladding; und
Figur 8 zeigt schematisch eine andere räumliche Anordnung der Pumplichtquelle.

### Ausführliche Beschreibung der Erfindung

Fig. 1 zeigt eine erfindungsgemäße Anregungseinheit 2 in der Draufsicht. Der Faserlaser enthält zusätzlich zu dieser Anregungseinheit 2 ein Gehäuse, eine Energieversorgung und ein Kühlsystem, die der Klarheit halber jeweils nicht dargestellt sind.

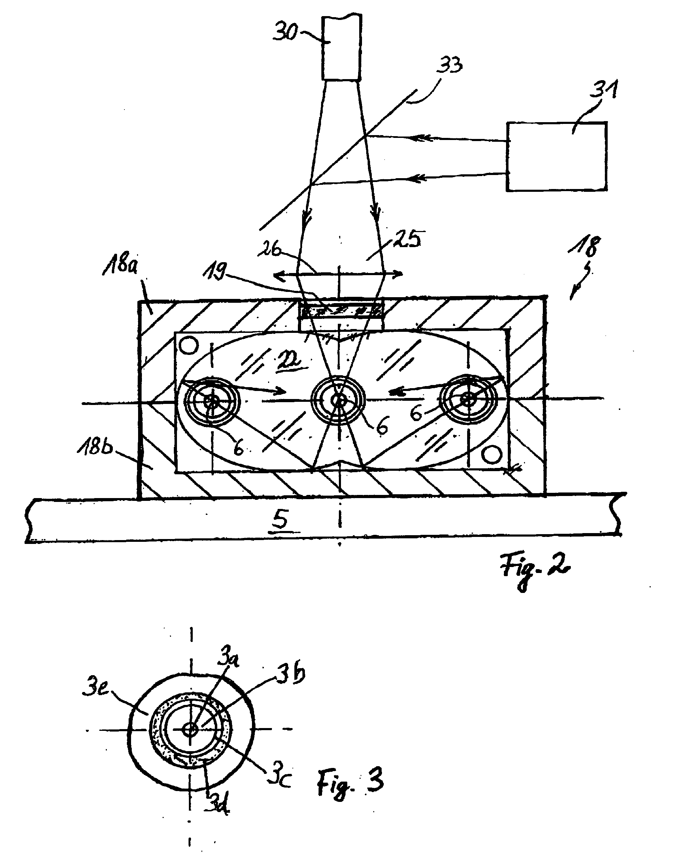

Man erkennt eine aktive Faser oder Anregungsfaser 3, die in dieser Ausführungsform in mehreren Schleifen über einer Grundplatte 5 angeordnet ist. Die Anregungsfaser 3 hat ein erstes Faserende 4a und ein zweites Faserende 4b. Mit "X" ist ein Bereich eines Anregungsgehäuse 18 gekennzeichnet, das in Verbindung mit Fig. 2 näher erläutert werden wird.

Es ist eine longitudinale Pumplichtquelle 7 gezeigt, die z.B. durch einen Diodenlaser realisiert sein kann und einen longitudinalen Pumpstrahl 9 abgibt, der über einen Eingangskollimator 11 und einen Bogenstecker 12a im Bereich des ersten Faserendes 4a in die Anregungsfaser 3 eingekoppelt wird. Es kann im Bereich der Pumplichtquelle 7 zusätzlich ein Seed-Laser vorgesehen sein, der senkrecht zur Pumplichtquelle 7 angeordnet ist und über einen teildurchlässigen Spiegel sein Licht einkoppelt. Der optionale Seed-Laser 31 kann auch im Bereich eines Ausgangsstrahls 17 des Faserlasers vorgesehen sein, wie in Fig. 1 gezeigt ist. Beide Seed-Laser im Bereich des ersten und zweiten Faserendes 4a, 4b sind optional und müssen nicht unbedingt vorhanden sein.

Ausgehend von der Pumplichtquelle 7 wird das Licht in der Anregungsfaser 3 transportiert, die wie gezeigt beispielsweise in 3 U-förmigen Schleifen über der Grundplatte 5 angeordnet ist. Die geradlinigen Bereiche der Anregungsfaser über der Grundplatte 5 bilden eine Anordnung in einer Ebene, die parallel zur Zeichenebene liegt. Es sind beispielhaft insgesamt 6 Anregungsgehäuse 18 schematisch dargestellt, von denen eines in Fig. 2 näher erläutert wird. Vor und zwischen den Anregungsgehäusen 18 befindet sich jeweils eine Halterungseinheit 8, durch die die Anregungsfaser 3 hindurchläuft und in denen diese gehaltert ist. In Fig. 1 sind zwischen den Anregungsgehäuse 18 schematisch jeweils drei Halterungseinheiten 8 gezeigt, wobei diese drei separaten Halterungseinheiten 8 auch zu einer Halterungseinheit zusammengefasst werden können.

Im Bereich des zweiten Faserendes 4b befindet sich ein zweiter Bogenstecker 12b. Das Licht aus der Anregungsfaser 3 tritt durch diesen zweiten Bogenstecker 12b, eine Ausgangslinse 13 und ein Auskoppelfenster 15 aus, von wo aus es dann zu einer (nicht dargestellten) Bearbeitungseinheit geführt werden kann.

Folgt man in Fig. 1 dem Verlauf der Anregungsfaser 3, so stellt man fest, dass die Faser auf ihrem Weg vom ersten Faserende 4a zum zweiten Faserende 4b stets nur in Krümmungen nach rechts verläuft. Man hat herausgefunden, dass sich bei Multimodefasern dadurch die Strahlqualität des abgegebenen Laserstrahls verschlechtern kann. Dieses Phänomen wird von Fachleuten als "Whispering Gallery" bezeichnet und bedeutet eine unerwünschte, ungleichmäßige Leistungsverteilung über den Querschnitt des Laserstrahls hinweg. In Bezug auf Fig. 1 hieße das konkret, dass der Laserstrahl in der Faser in einem Querschnitt senkrecht zur Zeichenebene am zweiten Faserende 4b auf der rechten Seite des Querschnitts eine höhere Leistung hätte als auf der linken Seite des Querschnitts. Wäre die Faser überwiegend in Linkskurven oder nur in Linkskurven verlegt, wäre die höhere Leistung am zweiten Faserende 4b analog auf der linken Seite.

Um diesem Phänomen entgegenzuwirken, kann die Anregungsfaser abwechselnd in Rechts- und Linkskurven verlegt sein (nicht gezeigt), wobei sich zwischen den einzelnen Krümmungen gerade Strecken befinden können. Es ist nicht unbedingt notwendig, auf jede Rechtskrümmung eine Linkskrümmung folgen zu lassen; genauso wenig ist es erforderlich, dass sich zwischen jeweils zwei Krümmungen eine gerade Strecke befindet. Die einzelnen gekrümmten Strecken sollten von der Anzahl und vom Krümmungsradius her gesehen ausgewogen sein. Dies gilt sowohl für eine flächige Anordnung wie z.B. gemäß Fig. 1 als auch für eine (nicht gezeigte) dreidimensionale Verlegung der Anregungsfaser.

Fig. 2 zeigt den Bereich X aus Fig. 1 als Schnittansicht durch das Anregungsgehäuse 18 senkrecht zur Faserlängsachse 6. Das Anregungsgehäuse 18 sitzt auf der Grundplatte 5 und besteht im Wesentlichen aus zwei Teilgehäusen 18a, 18b, die gasdicht miteinander verbunden sind. Diese beiden Teilgehäuse 18a, 18b bilden eine Anregungskammer 22 mit innen liegenden, elliptisch geformten Flächen aus. Diese elliptisch geformten Flächen sind stark reflektierend und vorzugsweise mit einer Metallisierung versehen. In einem Durchbruch in dem in Fig. 2 oberen Teilgehäuse 18a ist ein Gehäusefenster 19 eingepasst. Durch dieses Gehäusefenster 19 gelangt ein transversaler Pumpstrahl 25 von einer transversalen Pumplichtquelle 30 in die Anregungskammer 22 und trifft auf die Anregungsfaser 3. Über eine Abbildungsoptik 26 wird der Pumpstrahl 25 gebündelt. Die Abbildungsoptik 26 ist vorzugsweise justierbar und kann am Anregungsgehäuse angebracht sein. In einer nicht dargestellten Ausführungsform ist es auch möglich, die Elemente 26, 30, 31 und 33 unterhalb der Grundplatte 5 anzuordnen und den transversalen Pumpstrahl 25 durch entsprechende Bohrungen in der Grundplatte 5 und dem unteren Teilgehäuse 18b in die Anregungskammer 22 eintreten zu lassen. Es ist auch möglich, die transversale Pumplichtquelle 30 justierbar auszulegen.

Zusätzlich zur transversalen Pumplichtquelle 30 ist ein Seed-Laser 31 dargestellt, der zur Erzielung der oben erwähnten Vorteile auch im Bereich der transversalen Einkopplung verwendet werden kann, aber nicht unbedingt erforderlich ist. Bei 33 ist schematisch ein teildurchlässiger Spiegel dargestellt. Die Pumplichtquelle 30 und der Seed-Laser 31 strahlen Licht mit verschiedenen Wellenlängen ab.

Wie in Fig. 2 gezeigt ist, bilden die elliptisch geformten Flächen mehrere Brennlinien aus, in diesem Fall drei. Die Anregungsfaser 3 ist durch die Anregungskammer so durchgeführt, dass die Faserlängsachse 6 der einzelnen Teilstücke der Anregungsfaser 3 jeweils mit einer der drei Brennlinien der Anregungskammer 22 zusammenfällt. Die Brennlinie der Abbildungsoptik 26 fällt mit der Faserlängsachse 6 des in Fig. 2 in der Mitte befindlichen Teilstücks der Anregungsfaser 3 zusammen.

Fig. 3 zeigt einen Querschnitt durch die Anregungsfaser 3. Dabei bezeichnet Bezugszeichen 3a einen aktiven Kern der Faser, 3b bezeichnet ein Pumpcladding, 3c bezeichnet ein Quarzglascladding und 3d bezeichnet ein Silicon-Buffer, wie es Fachleuten auf diesem Gebiet hinlänglich bekannt ist. Mit 3e ist allgemein eine Umhüllung eingezeichnet, die in den meisten Fällen aus Kunststoff wie PA oder Nylon bestehen kann. Diese Umhüllung 3e kann ihrerseits aus mehreren Schichten bestehen, wobei dies für die Erfindung nicht wesentlich ist und von daher nicht näher erläutert wird.

Die Teilstücke der Anregungsfaser 3, die sich jeweils im Inneren der Teilgehäuse 18a, 18b befinden, sind abisoliert, d.h. über eine bestimmte Länge von der Umhüllung 3e sowie vom Silicon-Buffer 3d befreit. Die Anregungsfaser 3 läuft nach dieser Ausführungsform durch jede Anregungskammer 22 dreimal hindurch, so dass gemäß Fig. 2 beispielhaft insgesamt 3 * 6 = 18 Teilstrecken an der Anregungsfaser 3 abisoliert sind.

Diese 18 abisolierten Teilstrecken liegen in der Draufsicht gemäß Fig. 1 innerhalb der Anregungsgehäuse 18. Zwischen benachbarten Anregungsgehäusen 18, d.h. im Bereich der Halterungseinheit(en) 8, ist die Faser jeweils nicht abisoliert, also vollständig bis hin zu ihrer Umhüllung 3e vorhanden. Optional ist vorgesehen, die Anregungsfaser 3 auch im Bereich der Halterungseinheiten 8 abzuisolieren.

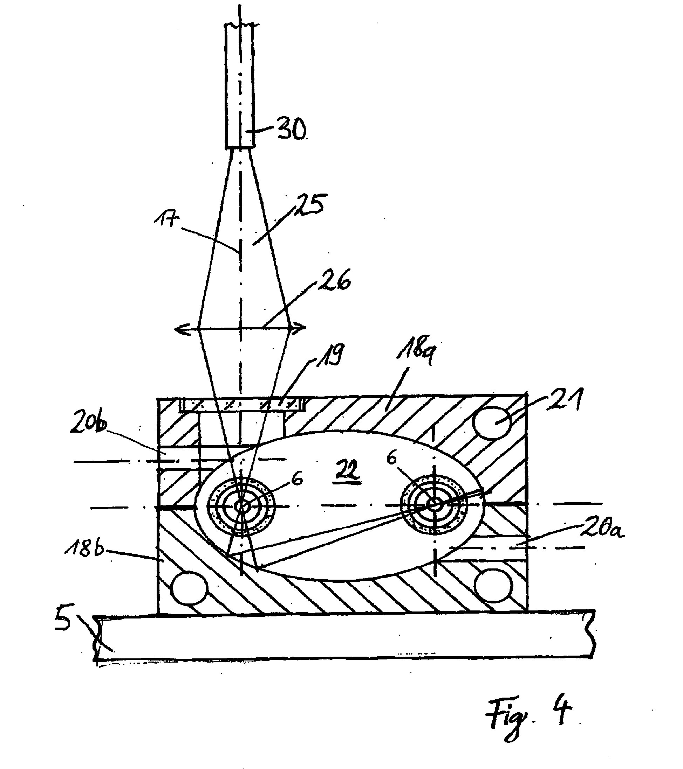

In Fig. 4 ist eine zweite Ausführungsform eines Anregungsgehäuses 18 für die erfindungsgemäße Anregungseinheit 2 gezeigt. Der prinzipielle Unterschied zur Ausführung gemäß Fig. 2 besteht darin, dass die Anregungsfaser 3 jede Anregungskammer 22 nur zweimal durchläuft. Die Innenflächen der beiden Teilgehäuse 18a, 18b sind auch hier elliptisch ausgebildet und bilden zwei Brennlinien aus. In diesen Brennlinien ist die Faserlängsachse 6 der Anregungsfaser angeordnet.

Zusätzlich sind ein Gaseinlass 20a und ein Gasauslass 20b gezeigt, durch die eine aktive, direkte Gaskühlung realisiert wird. Durch diese Einlässe 20a, 20b kann ein Gas, insbesondere ein Kühlgas zugeführt bzw. abgeführt werden. Mit Bezugszahl 21 sind Kühlbohrungen in den Teilgehäusen 18a, 18b angedeutet; die Teilgehäuse werden vorzugsweise von Kühlwasser durchströmt, wodurch eine passive Wasserkühlung verwirklicht ist.

Die transversale Pumplichtquelle 30 gibt einen transversalen Pumpstrahl 25 ab, der über die Abbildungsoptik 26 so fokussiert wird, dass die Brennlinie des fokussierten transversalen Pumpstrahls 25 mit der Längsachse des in der Anregungskammer 22 links befindlichen Teilstücks der Anregungsfaser 3 zusammenfällt.

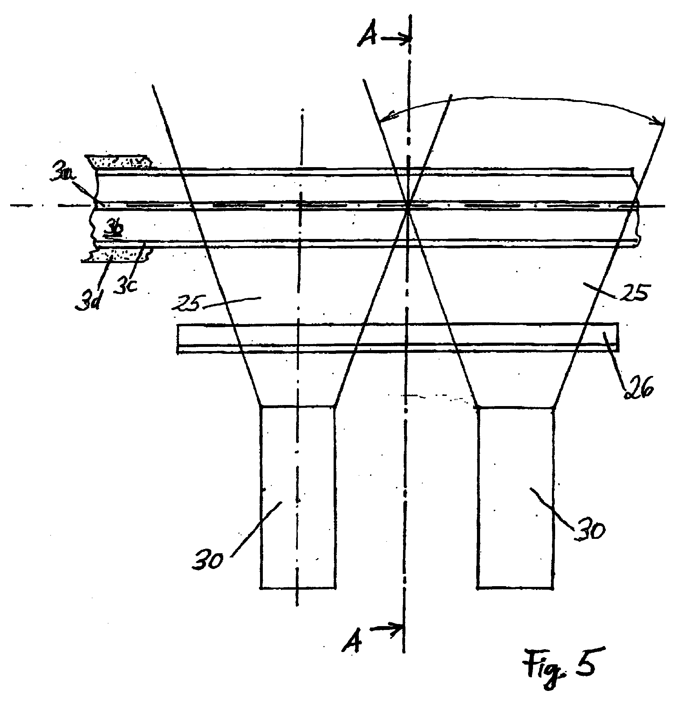

Fig. 5 erläutert die räumliche Anordnung der Pumplichtquellen 30 genauer: Bei diesen kann es sich um so genannte Laser bars handeln, die Fachleuten auf diesem Gebiet hinlänglich bekannt sind. Laser bars sind im Allgemeinen stabförmig und bestehen aus eine Vielzahl von parallelen, nebeneinander angeordneten Laserdioden, die ihrerseits länglich sind und einen rechteckigen Querschnitt haben können. Laser Bars geben ein flaches, schlitzförmig austretendes, stark divergierendes Laserlicht ab (siehe Doppelpfeil), das hier als Pumplicht verwendet wird. Das aus den Laser Bars austretende Laserlicht (vgl. Draufsicht Fig. 4 und Schnittansicht Fig. 5) wird über eine Abbildungsoptik 26 so gebündelt, dass die Brennlinien des Pumplichts, die Längsachsen der Anregungsfaser 3 und die Brennlinien der (hier nicht gezeigten) Anregungskammern 22 jeweils zusammenfallen.

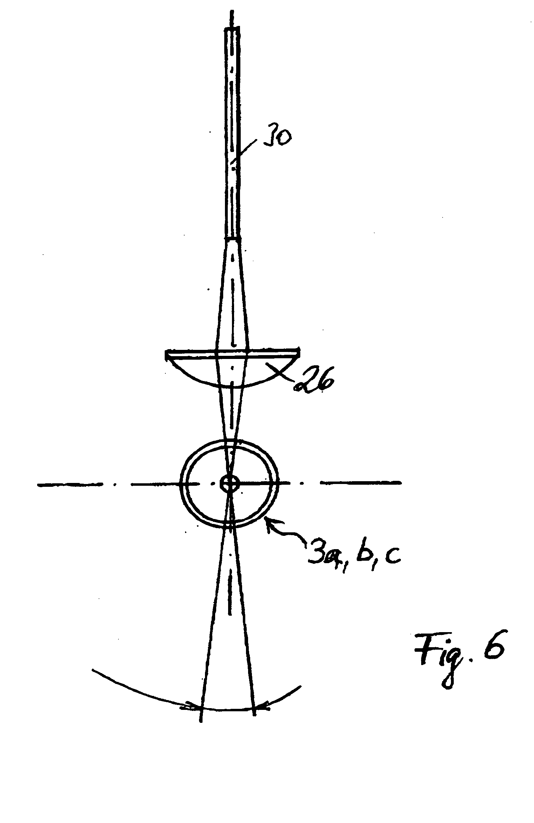

In Fig. 5 und Fig. 6 sind die Abstrahlcharakteristika eines beispielhaften Laser Bars 30 gezeigt. In der Draufsicht von Fig. 5 erkennt man die relative starke Strahldivergenz, die bis zu 30° betragen kann. Fig. 6 zeigt in einer Seitenansicht eine engere Strahldivergenz im Bereich bis zu ca. 8° (siehe Doppelpfeil). Die Abbildungsoptik 26, die beispielsweise in Form einer Zylinderlinse realisiert ist, ist über (nicht gezeigte) Halterungen am Anregungsgehäuse 18 selbst befestigt; diese Halterungen sind vorzugsweise justierbar. Vorzugsweise sind auch die Laser Bars bzw. transversalen Pumplichtquellen 30 justierbar. Die genaue Ausführung der jeweiligen Justierung und Anbringung der Halterungen von Abbildungsoptik und Pumplichtquelle sind für die Erfindung nicht wesentlich und werden von daher auch nicht beschrieben.

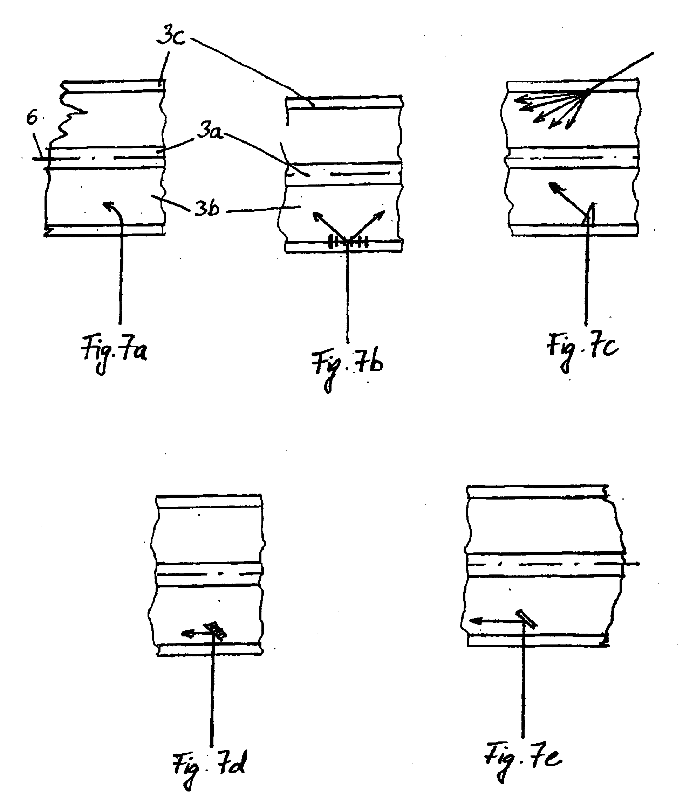

Figuren 7a bis 7e zeigen verschiedene Möglichkeiten auf, wie ein senkrechter Pumpstrahl in das Pumpcladding eingekoppelt werden kann. In diesen Figuren ist jeweils ein Stück einer Anregungsfaser 3 im Querschnitt gezeigt, genauer gesagt eine abisolierte Anregungsfaser 3 mit dem aktiven Kern 3a, dem Pumpcladding 3b und dem Quarzglascladding 3c. Diese Bezugszahlen sind nur für die Figuren 7a und 7b vergeben, gelten aber entsprechend auch für die anderen Figuren 7c bis 7e.

Fig. 7a zeigt die Einkopplung über einen so genannten inhomogenen Gradienten, Fig. 7b die Einkopplung über Beugung, Fig. 7c die Einkopplung über Brechung, Fig. 7d die Einkopplung über Spiegel und Fig. 7e die Einkopplung über Totalreflexion. Solche Strukturen werden allgemein über Verfahren zur Brechungsindexänderung erzeugt. Figuren 7a bis 7e zeigen die Anordnung der einkoppelnden Elemente bzw. Strukturen im Bereich der Oberfläche des Pumpcladdings 3b. Es ist auch möglich, diese Elemente bzw. Strukturen im Bereich der Oberfläche der aktiven Faser 3a anzuordnen, oder aber auch an beliebigen Stellen innerhalb des Volumens des Pumpcladdings 3b bzw. der aktiven Faser 3a.

Für alle Ausführungen nach den Figuren 7a bis 7e gilt, dass über eine kleine Fläche (z.B. punktförmiger oder linienförmiger Fokus) eingekoppelt wird und der eingekoppelte Strahl sich im Pumpcladding 3b bzw. der aktiven Faser 3a auf ein relativ großes Volumen verteilt. Hierbei geht die Energiedichte zurück, und Rückstrahlungen aus Cladding und Faser sind erwartungsgemäß gering. Außerdem nehmen die Einzelstrahlen andere Winkel ein und bleiben dadurch vorzugsweise im Quarzglasmedium.

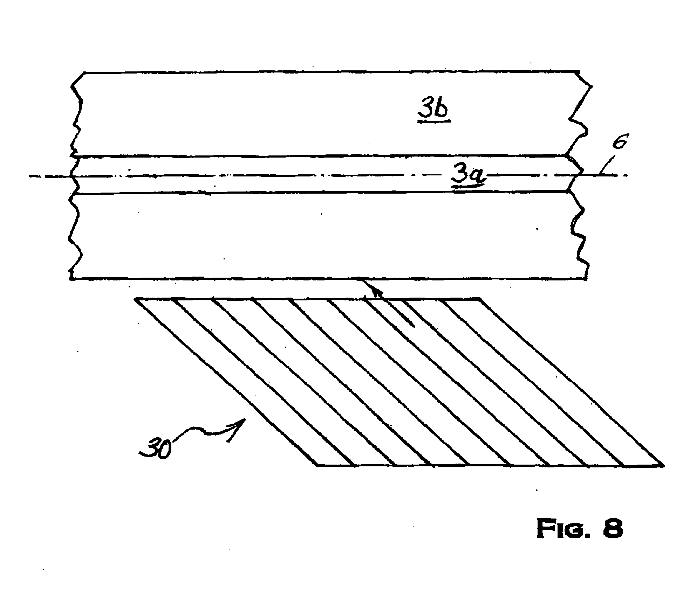

Figur 8 zeigt schematisch eine anderes Konzept einer Anregungseinheit. Hier ist eine transversale Pumplichtquelle 30 gezeigt, die sich aus mehreren einzelnen Laserdioden zusammensetzt, die jeweils unter einem Winkel zur Faserlängsachse 6 der Anregungsfaser angeordnet sind. Die Pumpeinheit liegt sehr nahe am aktiven Medium, und die Einkopplung findet ohne eine dazwischen liegende Abbildungsoptik statt. Von der Anregungsfaser sind nur der aktive Kern 3a und das Pumpcladding 3b gezeigt. Schematisch ist ein einzelner Lichtstrahl gezeigt, der schräg auf die Oberfläche des Pumpcladdings fällt. Zum Fokussieren des Pumpstrahls wird der Radius des Pumpcladdings genutzt.

Mittels des erfindungsgemäßen Faserlasers ist ein paralleles, gleichzeitiges, über eine lange Strecke der Anregungsfaser erfolgendes Pumpen derselben möglich, um einen schnellstmöglichen Laserstrahlerzeugungseffekt entstehen zu lassen. Durch örtlich genaue Positionsfestlegung und durch eine Spiegel-und Linsenanordnung im Bereich der Faserenden 4a, 4b ist eine Modenkopplung zum Kurzpulslaser erreichbar. Dadurch ist eine Einengung und Stabilisierung der Bandbreite der Wellenlänge möglich. Vorteilhaft ist auch das Einschreiben von Brechungsindexänderungen an der Oberfläche des Pumpcladdings sowie an der Oberfläche des aktiven Mediums und in den beiden Volumina dieser Elemente, weil dadurch ein Umlenken der Pumpstrahlung in den Akzeptanzwinkel der Anregungsfaser bzw. des aktiven Mediums erzielt werden kann.

In dieser Erfindung ist eine Vorrichtung beansprucht, die eine einfache und preiswerte Anregung von so genannten Multimode-Fasern ermöglicht. Mit Multimode-Fasern sind aktive Fasern, genauer gesagt Faserkerne gemeint, die einen Durchmesser von 20µm bis zu 500µm und darüber hinaus haben. Im Gegensatz dazu werden im Stand der Technik als aktive Fasern bislang hauptsächlich Single-Mode-Fasern verwendet, die aus physikalischen Gründen einen maximalen Durchmesser im Bereich von nur ca. 4 bis 20 µm haben können. In Anbetracht des stark vergrößerten Volumens des aktiven Mediums (des Faserkerns) wird deutlich, dass die erfindungsgemäßen Fasern einen wesentlich höheren Leistungsausgang haben können als die bisher verwendeten. Solche großen Kerndurchmesser haben darüber hinaus den Vorteil, dass bei der Queranregung der Wirkungsgrad sehr hoch ist, weil die Wellenfronten des Pumplichts vollständig in das Volumen des Faserkerns fallen.

Es ist anzumerken, dass Aspekte der Erfindung, die im Hinblick auf eine Ausführungsform beschrieben sind, auch in einer anderen Ausführungsform enthalten sein können, wenn sie auch nicht konkret in Bezug darauf beschrieben sind. Das heißt, alle Ausführungsformen und/oder Merkmale irgendeiner Ausführungsform können auf beliebige Weise miteinander kombiniert sein.

### Bezugszeichenliste

| | |
|---|---|
| 1 | Faserlaser |
| 2 | Anregungseinheit |
| 3 | Anregungsfaser |
| 3a | aktiver Kern |
| 3b | Pumpcladding |
| 3c | Quarzglascladding |
| 3d | Silicon-Buffer |
| 3e | Umhüllung |
| 4a | erstes Faserende |
| 4b | zweites Faserende |
| 5 | Grundplatte |
| 6 | Faserlängsachse |
| 7 | longitudinale Pumplichtquelle |
| 8 | Halterungseinheit |
| 9 | longitudinaler Pumpstrahl |
| 11 | Eingangskollimator |
| 12a | Bogenstecker |
| 12b | Bogenstecker |
| 13 | Ausgangslinse |
| 15 | Auskoppelfenster |
| 17 | Ausgangsstrahl |
| 18 | Anregungsgehäuse |
| 18a | Teilgehäuse |
| 18b | Teilgehäuse |
| 19 | Gehäusefenster |
| 20a | Gaseinlass |
| 20b | Gasauslass |
| 21 | Kühlkanal |
| 22 | Anregungskammer |
| 25 | transversaler Pumpstrahl |
| 26 | Abbildungsoptik |
| 30 | transversale Pumplichtquelle |
| 31 | Seed-Laser |
| 33 | teildurchlässiger Spiegel |

## Patentansprüche

1. Anregungseinheit (2) für einen Faserlaser, die mindestens eine Anregungsfaser (3) aufweist, die eine Faserlängsachse (6) hat und in einem Resonatorbereich des Faserlasers eine zweidimensionale oder dreidimensionale Struktur bildet,
wobei die Anregungsfaser (3) im Querschnitt gesehen aus einem aktiven Faserkern (3a), einem den aktiven Kern (3a) umgebenden Pumpcladding (3b), einem das Pumpcladding (3b) umgebenden Quarzglasmantel (3c), einem den Quarzglasmantel (3c) umhüllenden Silicon-Buffer (3d) und einer Umhüllung (3e) besteht,
wobei im Resonatorbereich eine Grundplatte (5) vorgesehen ist, auf der eine Vielzahl von Anregungsgehäusen (18) vorgesehen sind, die jeweils eine gasdichte Anregungskammer (22) bilden, wobei die Anregungsfaser (3) jede Anregungskammer (22) mindestens einmal durchläuft und, in der Faserlängsachse (6) der Anregungsfaser (3) gesehen, seitlich der Anregungsgehäuse (18) jeweils in Halterungseinheiten (8) gefasst ist, wobei in den Anregungskammern (22) die Umhüllung (3e) der Anregungsfaser (3) entfernt ist und in den Bereichen der Halterungseinheiten (8) vollständig vorhanden ist,
wobei die Anregungsfaser (3) ein erstes Faserende (4a) hat, das als Rückspiegelelement dient, und ein zweites Faserende (4b), das als Auskoppelspiegelelement dient, wobei
a) die Anregungskammern (22) in einem Querschnitt senkrecht zur Faserlängsachse (6) der Anregungsfaser (3) elliptisch ausgebildet sind,
b) die Anregungsgehäuse (18) mit einem lichtdurchlässigen Gehäusefenster (19) versehen sind, und
c) im Bereich des lichtdurchlässigen Gehäusefensters (19) jeweils eine transversale Pumplichtquelle (30) so angeordnet ist, dass ein die Pumplichtquelle (30) verlassender transversaler Pumpstrahl (25) vorzugsweise senkrecht auf die Faserlängsachse (6) der Anregungsfaser (3) fällt.

2. Anregungseinheit nach Anspruch 1, **dadurch gekennzeichnet, dass** die Anregungsfaser (3) jede Anregungskammer (22) zwei-, drei-, viermal oder öfter durchläuft.

3. Anregungseinheit nach Anspruch 1 oder 2, **dadurch gekennzeichnet, dass** die Anregungskammern (22) von einem Gas durchspült werden.

4. Anregungseinheit nach Anspruch 1, **dadurch gekennzeichnet, dass** die Anregungsgehäuse (18) von einem Kühlmedium durchflossen werden.

5. Anregungseinheit nach Anspruch 4, **dadurch gekennzeichnet, dass** die Anregungsgehäuse (18) aus zwei Teilgehäusen (18a, 18b) bestehen.

6. Anregungseinheit nach Anspruch 3, **dadurch gekennzeichnet, dass** ellipsenförmig gekrümmte Flächen innerhalb der Anregungskammern (22) jeweilige Brennlinien bilden.

7. Anregungseinheit nach Anspruch 6, **dadurch gekennzeichnet, dass** die Brennlinien der ellipsenförmig gekrümmten Flächen parallel zueinander verlaufen.

8. Anregungseinheit nach Anspruch 7, **dadurch gekennzeichnet, dass** die Faserlängsachse (6) der Anregungsfaser (3) innerhalb der Anregungskammern (22) mit den Brennlinien der ellipsenförmig gekrümmten Flächen zusammenfällt.

9. Anregungseinheit nach einem der vorhergehenden Ansprüche, **dadurch gekennzeichnet, dass** zwischen der transversalen Pumplichtquelle (30) und der Anregungsfaser (3) jeweils eine Abbildungsoptik (26) vorhanden ist.

10. Anregungseinheit nach einem der vorhergehenden Ansprüche, **dadurch gekennzeichnet, dass** die Abbildungsoptik und/oder die transversale Pumplichtquelle (30) justierbar sind.

11. Anregungseinheit nach Anspruch 1, **dadurch gekennzeichnet, dass** die transversale Pumplichtquelle (30) aus der Gruppe ausgewählt ist, die umfasst: Laser Bars, Laserdioden, Diodenlaser, sonstige Laserlichtquellen, Seed-Laser, Laser Stacks.

12. Anregungseinheit nach einem der vorhergehenden Ansprüche, **dadurch gekennzeichnet, dass** mehrere Anregungsgehäuse (18) zu einem größeren, durchgehenden Anregungsgehäuse zusammengefasst sind.

13. Anregungseinheit nach einem der vorhergehenden Ansprüche, wobei am ersten Faserende (4a) der Anregungsfaser (3) eine Einkoppeleinheit vorgesehen ist und am zweiten Faserende (4b) der Anregungsfaser eine Auskoppeleinheit vorgesehen ist.

14. Anregungseinheit nach Anspruch 13, **dadurch gekennzeichnet, dass** im Bereich des ersten Faserendes (4a) und/oder im Bereich des zweiten Faserendes (4b) eine longitudinale Pumplichtquelle (7) und/oder ein Seed-Laser (31) vorhanden sind.

15. Anregungseinheit nach Anspruch 14, **dadurch gekennzeichnet, dass** die longitudinale Pumplichtquelle aus der Gruppe ausgewählt ist, die umfasst: Laser Bars, Laserdioden, Diodenlaser, sonstige Laserlichtquellen, Seed-Laser.

16. Anregungseinheit nach einem der vorhergehenden Ansprüche, **dadurch gekennzeichnet, dass** die Anregungsfaser (3) mit entgegengesetzten Krümmungsrichtungen angeordnet ist.

17. Anregungseinheit nach einem der vorhergehenden Ansprüche, **dadurch gekennzeichnet, dass** der transversale Pumpstrahl (25) über eine relativ kleine Fläche, vorzugsweise mit einem punkt- oder linienförmigen Fokus, in das Pumpcladding (3b) der Anregungsfaser (3) eingekoppelt wird.

18. Anregungseinheit nach Anspruch 17, **dadurch gekennzeichnet, dass** der transversale Pumpstrahl (25) über einen inhomogenen Gradienten, über Beugung, über Brechung, über Spiegel oder über Totalreflexion in das Pumpcladding (3b) der Anregungsfaser (3) eingekoppelt wird.

19. Faserlaser mit einer Anregungseinheit nach einem der vorhergehenden Ansprüche.

## Claims

1. Excitation unit (2) for a fibre laser, said excitation unit having at least one excitation fibre (3) which has a longitudinal axis (6) and which forms a two-dimensional or three-dimensional structure in a resonator region of the fibre laser, the excitation fibre (3), when viewed in cross-section, consisting of an active fibre core (3a), a pump cladding (3b) that surrounds the active core (3a), a quartz glass casing (3) that surrounds the pump cladding (3b), a silicon buffer (3d) that surrounds the quartz glass casing (3) and a cover (3e), the resonator region being equipped with a base plate (5) on which a plurality of excitation housings (18) are provided, each forming a gas-tight excitation chamber (22), the excitation fibre running through each excitation chamber at least once and being held in holding units (8) laterally to each excitation chamber (18) when viewed in the longitudinal axis (6) of the excitation fibre (3), the cover of the excitation fibre being removed in the excitation chambers (22) and being completely present in the regions of the holding units (8), the excitation fibre (3) having a first fibre end (4a) which serves as a reflector element, and a second fibre end (4b) which serves as an outcoupling mirror element, whereas
a) the excitation chambers (22) are formed in an elliptical manner in a cross-section perpendicular to the longitudinal axis (6) of the excitation fibre (3),
b) the excitation housings (18) are provided with a translucent housing window (19), and
c) a transverse pump light source (30) is arranged in the region of each translucent housing window (19) such that a pump beam (25) that leaves the pump light source (30) impinges onto the longitudinal axis (6) of the excitation fibre (3) preferably in a perpendicular manner.

2. Excitation unit according to claim 1, **characterised in that** the excitation fibre (3) runs through each excitation chamber (22) two, three, four times or more often.

3. Excitation unit according to claim 1 or 2, **characterised in that** the excitation chambers (22) are flushed through by a gas.

4. Excitation unit according to claim 1, **characterised in that** the excitation housings (18) are flushed through by a cooling medium.

5. Excitation unit according to claim 4, **characterised in that** the excitation housings (18) consist of two housing sections (18a, 18b).

6. Excitation unit according to claim 3, **characterised in that** elliptical curved surfaces within the excitation chambers (22) create focal lines.

7. Excitation unit according to claim 6, **characterised in that** the focal lines of the elliptical curved surfaces run parallel to one another.

8. Excitation unit according to claim 7, **characterised in that** the longitudinal axis (6) of the excitation fibre (3) within the excitation chambers (22) coincide with the focal lines of the elliptical curved surfaces.

9. Excitation unit according to one of the preceding claims, **characterised in that** a focusing lens (26) is provided between the transverse pump light source (30) and the excitation fibre (3).

10. Excitation unit according to one of the preceding claims, **characterised in that** the focusing lens and/or the transverse pump light source (30) are adjustable.

11. Excitation unit according to claim 1, **characterised in that** the transverse pump light source (30) is selected from the group comprising: laser bars, laser diodes, diode lasers, other laser light sources, seed lasers, laser stacks.

12. Excitation unit according to one of the preceding claims, **characterised in that** several excitation housings (18) are combined to form a larger, continuous excitation housing.

13. Excitation unit according to one of the preceding claims, wherein an incoupling unit is provided on the first fibre end (4a) of the excitation fibre (3) and an outcoupling unit is provided on the second fibre end (4b) of the excitation fibre.

14. Excitation unit according to claim 13, **characterised in that** a longitudinal pump light source (7) and/or a seed laser (31) are provided in the region of the first fibre end (4a) and/or in the region of the second fibre end (4b).

15. Excitation unit according to claim 14, **characterised in that** the longitudinal pump light source is selected from the group comprising: laser bars, laser diodes, diode lasers, other laser light sources, seed lasers.

16. Excitation unit according to one of the preceding claims, **characterised in that** the excitation fibre (3) is arranged with opposing directions of curvature.

17. Excitation unit according to one of the preceding claims, **characterised in that** the transverse pump beam (25) is coupled into the pump cladding (3b) of the excitation fibre (3) over a small surface area, preferably with a point-formed or linear focus.

18. Excitation unit according to claim 17, **characterised in that** the transverse pump beam (25) is coupled into the pump cladding (3b) of the excitation fibre (3) by means of an inhomogeneous gradient, diffraction, refraction, mirrors or total reflection.

19. Fibre laser with an excitation unit according to one of the preceding claims.

## Revendications

1. Unité d'excitation (2) pour un laser à fibre, qui comporte au moins une fibre d'excitation (3) qui possède un axe longitudinal de fibre (6) et qui forme une structure bidimensionnelle ou tridimensionnelle dans une zone de résonateur du laser à fibre, dans laquelle la fibre d'excitation (3) est composée, vue en section transversale, d'une âme de fibre active (3a), d'un revêtement de pompage (3b) entourant l'âme active (3a), d'une enveloppe de quartz (3c) entourant le revêtement de pompage (3b), d'un tampon en silicium (3d) qui entoure l'enveloppe de quartz (3c), et d'un enrobage (3e),
dans laquelle il est prévu dans la zone de résonateur une plaque de base (5) sur laquelle sont prévus une pluralité de boîtiers d'excitation (18), qui forment chacun une chambre d'excitation (22) étanche aux gaz, dans laquelle la fibre d'excitation (3) traverse chaque chambre d'excitation (22) au moins une fois et, vue dans l'axe longitudinal (6) de la fibre excitation (3) est enchâssée latéralement du boîtier d'excitation (18) dans des unités de monture respectives (8), dans laquelle l'enrobage (3e) de la fibre excitation (3) est supprimé dans les chambres d'excitation (22) et est entièrement présent dans les zones des unités de monture (8),
dans laquelle la fibre d'excitation (3) a une première extrémité de fibre (4a), qui sert d'élément formant miroir de renvoi, et une seconde extrémité de fibre (4b), qui sert d'élément formant miroir de découplage,
dans laquelle
a) les chambres d'excitation (22) sont réalisées sous forme elliptique dans une section transversale perpendiculaire à l'axe longitudinal (6) de la fibre d'excitation (3),
b) les boîtiers d'excitation (18) sont dotés d'une fenêtre de boîtier (19) transparente à la lumière, et
c) dans la région de la fenêtre de boîtier (19) transparente à la lumière, une source transversale de lumière pompée (30) est agencée respectivement de telle manière qu'un rayon pompé transversal (25) qui quitte la source de lumière pompée (30) tombe de préférence perpendiculairement sur l'axe longitudinal (6) de la fibre d'excitation (3).

2. Unité d'excitation selon la revendication 1, **caractérisée en ce que** la fibre excitation (3) traverse chaque chambre d'excitation (22) deux fois, trois fois, quatre fois ou plus.

3. Unité d'excitation selon la revendication 1 ou 2, **caractérisée en ce que** les chambres d'excitation (22) sont traversées par un gaz.

4. Unité d'excitation selon la revendication 1, **caractérisée en ce que** les boîtiers d'excitation (18) sont traversés par un fluide réfrigérant.

5. Unité d'excitation selon la revendication 4, **caractérisée en ce que** les boîtiers d'excitation (18) sont composés de de boîtiers partiels (18a, 18b).

6. Unité d'excitation selon la revendication 3, **caractérisée en ce que** des surfaces à courbure elliptique à l'intérieur des chambres d'excitation (22) forment des lignes focales respectives.

7. Unité d'excitation selon la revendication 6, **caractérisée en ce que** les lignes focales des surfaces à courbure elliptique s'étendent parallèlement les unes aux autres.

8. Unité d'excitation selon la revendication 7, **caractérisée en ce que** l'axe longitudinal (6) de la fibre d'excitation (3) à l'intérieur des chambres d'excitation (22) coïncide avec les lignes focales des surfaces à courbure elliptique.

9. Unité d'excitation selon l'une des revendications précédentes, **caractérisée en ce qu'**une optique d'imagerie (26) respective est présente entre la source transversale de lumière pompée (30) et la fibre d'excitation (3).

10. Unité d'excitation selon l'une des revendications précédentes, **caractérisée en ce que** l'optique d'imagerie et/ou la source transversale de lumière pompée (30) peut être ajustée.

11. Unité d'excitation selon la revendication 1, **caractérisée en ce que** la source transversale de lumière pompée (30) est choisie parmi le groupe qui inclut : barreau laser, diode à laser, laser-diode, autre source de lumière à laser, laser d'amorçage, empilement laser.

12. Unité d'excitation selon l'une des revendications précédentes, **caractérisée en ce que** plusieurs boîtiers d'excitation (18) sont regroupés en un boîtier d'excitation plus grand continu.

13. Unité d'excitation selon l'une des revendications précédentes, dans laquelle une unité de couplage est prévue à la première extrémité (4a) de la fibre d'excitation (3), et une unité de découplage est prévue à la seconde extrémité (4b) de la fibre d'excitation.

14. Unité d'excitation selon la revendication 13, **caractérisée en ce qu'**il est prévu une source longitudinale de lumière pompée (7) et/ou un laser d'amorçage (31) dans la région de la première extrémité de fibre (4a) et/ou dans la région de la seconde extrémité de fibre (4b).

15. Unité d'excitation selon la revendication 14, **caractérisée en ce que** la source longitudinale de lumière pompée est choisie parmi le groupe qui inclut : barreau laser, diode à laser, laser-diode, autre source de lumière à laser, laser d'amorçage, empilement laser.

16. Unité d'excitation selon l'une des revendications précédentes, **caractérisée en ce que** la fibre d'excitation (3) est agencée avec des directions de courbure opposées.

17. Unité d'excitation selon l'une des revendications précédentes, **caractérisée en ce que** le rayon transversal de pompage (25) est injecté dans le revêtement de pompage (3b) de la fibre d'excitation (3) sur une surface relativement petite, de préférence avec un foyer ponctuel ou linéaire.

18. Unité d'excitation selon la revendication 17, **caractérisée en ce que** le rayon transversal de pompage (25) est injecté dans le revêtement de pompage (3b) de la fibre d'excitation (3) via un gradient non homogène, via une diffraction, via une réfraction, via un miroir, ou via une réflexion totale.

19. Laser à fibre comprenant une unité d'excitation selon l'une des revendications précédentes.
